(19) Europäisches Patentamt
European Patent Office
Office européen des brevets

(11) **EP 0 944 097 B1**

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(51) Int Cl.[7]: **H01B 1/08**, C09C 1/00, C09D 5/24, C09C 3/06

(21) Anmeldenummer: **99104533.7**

(22) Anmeldetag: **06.03.1999**

(54) **Leitfähige Pigmente**

Conductive pigment

Pigment conducteur

(84) Benannte Vertragsstaaten:
**DE ES FI FR GB IT**

(30) Priorität: **18.03.1998 DE 19811693**
      **18.03.1998 DE 19811694**

(43) Veröffentlichungstag der Anmeldung:
**22.09.1999 Patentblatt 1999/38**

(73) Patentinhaber: **MERCK PATENT GmbH**
**64293 Darmstadt (DE)**

(72) Erfinder:
• **Dietz, Johann Dr.**
  **63128 Dietzenbach (DE)**
• **Glausch, Ralf Dr.**
  **64297 Darmstadt (DE)**
• **Goebel, Wilhelm**
  **64401 Gross-Bieberau (DE)**
• **Vogt, Reiner Dr.**
  **64289 Darmstadt (DE)**

(56) Entgegenhaltungen:
**EP-A- 0 627 385        WO-A-96/06437**
**DE-A- 4 435 301**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft elektrisch leitfähige Pigmente, die als leitfähige Schicht auf einem Substrat eine mit Fluor und Phosphor dotierte Zinnoxidschicht aufweisen.

In vielen Bereichen der Technik besteht ein Bedarf an leitfähigen Pigmenten, mit denen zum Beispiel elektrisch leitfähige, antistatische oder elektromagnetische Wellen abschirmende Kunststoffe, Lacke, Beschichtungen, Fasern oder ähnliches hergestellt werden können. In großen Mengen wird dazu leitfähiger Ruß eingesetzt, der jedoch aufgrund seiner hohen Lichtabsorption nicht für helle oder farbige Beschichtungen eingesetzt werden kann. Ein weiterer Nachteil ist die starke Absorption von Ruß im IR-Bereich, die z.B. bei Sonneneinstrahlung zu einer vielfach unerwünschten Erwärmung der beschichteten Gegenstände führt.

Für helle, leitfähige Beschichtungen werden deshalb zunehmend dotierte Metalloxide, insbesondere Artimon dotiertes Zinnoxid, eingesetzt.

In US 5 472 640 werden leitfähige plättchenförmige Pigmente beschrieben, bei denen ein plättchenförmiges, mit einem oder mehreren Metalloxidschichten beschichtetes Substrat mit einer leitfähigen Schicht aus mit Antimon dotiertem Zinnoxid überzogen ist, wobei zwischen der leitfähigen Schicht und der Metalloxidschicht eine dünne $SiO_2$-Schicht angeordnet ist.

Aus US 5 350 448 ist ein helles, elektrisch leitfähiges Pigment bekannt, das aus einem plättchenförmigen Substrat und mit Halogen dotiertem Zinnund/oder Titandioxid als leitfähiger Schicht besteht. Für den spezifischen Widerstand des Pigmentes werden weniger als 25 k$\Omega$cm angegeben.

DE 44 35 301 beschreibt elektrisch leitfähige Pigmente, die als leitfähige Schicht auf einem Substrat eine mit Phosphor dotierte Zinnoxidschicht aufweisen. Für den spezifischen Widerstand der Pigmente werden weniger als 10 k$\Omega$cm angegeben.

Die hellen, leitfähigen Pigmente aus dem Stand der Technik weisen Werte für die elektrische Leitfähigkeit auf, die den hohen Anforderungen für bestimmte leitfähige Beschichtungen nicht genügen.

Aufgabe der vorliegenden Erfindung ist es, helle, leitfähige Pigmente mit einer besseren Leitfähigkeit zur Verfügung zu stellen.

Diese Aufgabe wird gemäß der Erfindung gelöst durch helle, leitfähige Pigmente, umfassend ein mit einer leitfähigen Schicht überzogenes Substrat, die dadurch gekennzeichnet sind, daß die leitfähige Schicht aus einer mit Phosphor und Fluor dotierten Zinnoxidschicht besteht. Gegebenenfalls kann zwischen Substrat und leitfähiger Schicht eine Zwischenschicht angeordnet sein.

Weiterhin wird diese Aufgabe gemäß der Erfindung gelöst durch ein Verfahren zur Herstellung der erfindungsgemäßen Pigmente, indem das Substrat in Wasser suspendiert und eine Lösung eines hydrolysierbaren Zinnsalzes, die wäßrige Lösung einer Phosphorverbindung und die wäßrige Lösung eines Fluorids zudosiert werden, wobei der pH-Wert der Substratsuspension durch gleichzeitige Zugabe von Säure oder Base in einem Bereich von 1 bis 5 konstant gehalten wird, und das beschichtete Substrat abgetrennt, gewaschen, getrocknet und bei Temperaturen von 400 bis 1100 °C unter Ausschluß von Sauerstoff kalziniert wird.

Weiterhin wird diese Aufgabe gemäß der Erfindung gelöst durch ein Verfahren zur Herstellung der erfindungsgemäßen Pigmente, indem das Substrat in Wasser suspendiert und die wäßrige Lösung eines Silikats zudosiert wird, wobei durch gleichzeitige Zugabe von Säure der pH-Wert in einem Bereich von 4 bis 10 konstant gehalten wird und anschließend eine Lösung eines hydrolysierbaren Zinnsalzes, die wäßrige Lösung einer Phosphorverbindung und die wäßrige Lösung eines Fluorids zudosiert werden, wobei der pH-Wert der Substratsuspension durch gleichzeitige Zugabe von Säure oder Base in einem Bereich von 1 bis 5 konstant gehalten wird, und das beschichtete Substrat abgetrennt, gewaschen, getrocknet und bei Temperaturen von 400 bis 1100 °C unter Ausschluß von Sauerstoff kalziniert wird.

Weiterhin wird diese Aufgabe gemäß der Erfindung gelöst durch ein Verfahren zur Herstellung der erfindungsgemäßen Pigmente, indem das Substrat in Wasser suspendiert und nach Zugabe eines Komplexbildners eine Bariumsalzlösung zudosiert wird, wobei durch gleichzeitige Dosierung von verdünnter Schwefelsäure und Natriumsulfat der pH-Wert in einem Bereich von 0 bis 5 konstant gehalten wird und anschließend eine Lösung eines hydrolysierbaren Zinnsalzes, die wäßrige Lösung einer Phosphorverbindung und die wäßrige Lösung eines Fluorids zudosiert werden, wobei der pH-Wert der Substratsuspension durch gleichzeitige Zugabe von Säuren oder Base in einem Bereich von 1 bis 5 konstant gehalten wird, und das beschichtete Substrat abgetrennt, gewaschen, getrocknet und bei Temperaturen von 400 bis 1100 °C unter Ausschluß von Sauerstoff kalziniert wird.

Gegenstand der Erfindung sind außerdem die Verwendung der erfindungsgemäßen Pigmente zur Pigmentierung von Lacken, Druckfarben, Kunststoffen, Glasuren für Keramiken und Gläser und Kosmetika. Hierfür können sie auch als Mischungen mit handelsüblichen Pigmenten, beispielsweise anorganischen und organischen Absorptionspigmenten, Metalleffektpigmenten und LCP-Pigmenten, eingesetzt werden.

Als Substrate können sowohl plättchenförmige als auch sphärische Partikel oder deren Gemische eingesetzt werden. Alle bekannten plättchenförmigen Trägermaterialien, wie z.B. Metalle, Metalloxide, Glimmerpigmente, synthetische Plättchen können nach dem erfindungsgemäßen Verfahren beschichtet werden, wobei diese bereits mit Metalloxiden beschichtet sein können. Beispiele hierfür sind natürlicher oder synthetischer Glimmer, andere Schichtsilikate wie Talkum, Kaolin oder Sericit oder andere vergleichbare Materialien wie plättchenförmiges Eisenoxid, Aluminiumplättchen, Wismutoxidchlorid, $SiO_2$-, Glas- oder synthetische Keramikflakes.

Besonders bevorzugt als Substrate sind Glimmer und plättchenförmige Pigmente sowie $SiO_2$-Flakes, die gemäß der Internationalen Anmeldung WO 93/08237 hergestellt werden. Sie bestehen aus einer transparenten, anorganischen plättchenförmigen Matrix, vorzugsweise Siliciumdioxid, die ein nichtlösliches Farbmittel enthalten kann. Wenn zum Beispiel ein hochtransparentes leitfähiges Pigment hergestellt werden soll, wird ein plättchenförmiges Trägermaterial eingesetzt, dessen Matrix lediglich aus Siliciumdioxid besteht. Diese leitfähigen Pigmente sind besonders geeignet zur Herstellung von elektrisch leitfähigen Klarlacken oder transparenten Elektrodenschichten.

Wird aber ein helles, leitfähiges Pigment mit hohem Deckvermögen verlangt, werden in die transparente Matrix nichtlösliche Farbmittel, beispielsweise Titandioxidpartikel, eingearbeitet. Der Vorteil dieses bevorzugten Trägermaterials besteht darin, daß man bereits für die Herstellung des erfindungsgemäßen Pigmentes von einem Trägermaterial mit hohem Deckvermögen ausgehen kann.

Da bei dem Verfahren keine hohen Kräfte benötigt werden, ist das Verfahren auch hervorragend zur Beschichtung von Perlglanzpigmenten geeignet. Es können alle üblichen Perlglanzpigmente verwendet werden, z.B. Glimmerbeschichtungen mit farbigen oder farblosen Metalloxiden, wie $TiO_2$, $Fe_2O_3$, $SnO_2$, $Cr_2O_3$, ZnO und anderen Metalloxiden, allein oder in Mischung in einer einheitlichen Schicht oder in aufeinanderfolgenden Schichten. Diese Pigmente sind z.B. aus den deutschen Patenten und Patentanmeldungen 14 67 468, 19 59 998, 20 09 566, 2 14 545, 22 15 191, 2 44 298, 23 13 331, 25 22 572, 32 11 602 und 32 35 017 bekannt und im Handel erhältlich z.B. unter dem Warenzeichen Iriodin® von der Firma MERCK KGaA, Darmstadt.

Die sphärischen Partikel können z.B. aus $SiO_2$ oder Metalloxiden, wie z.B. $Fe_2O_3$, $TiO_2$, $MgTiO_3$, $CaTiO_3$, $BaTiO_3$, $SrTiO_3$, $Al_2O_3$ oder $BaSO_4$, $CaSO_4$ oder $CaCO_3$ bestehen.

Die Partikel weisen einen mittleren Durchmesser von weniger als 200 μm und insbesondere nicht mehr als 50 μm auf. Plättchenförmige Substrate weisen in der Hauptdimension eine Ausdehnung von weniger als 500 μm und insbesondere weniger als 250 μm auf, und die Dicke beträgt weniger als 10 μm, vorzugsweise nicht mehr als 5 μm und insbesondere im Bereich von 0,1-1 μm. Das Verhältnis aus der Ausdehnung in der Hauptdimension zur Dicke (aspect ratio) beträgt bei den plättchenförmigen Substraten mehr als 3 und insbesondere mehr als 5.

Die zu beschichtenden Substrate können auch aus einem Gemisch von plättchenförmigen und sphärischen Partikeln bestehen, wobei das Verhältnis plättchenförmig:sphärisch vorzugsweise im Bereich 80:20 bis 20:80 und insbesondere bei 50:50 liegt.

In einer besonderen Ausführungsform des Pigmentes kann zwischen Substrat und leitfähiger Schicht eine Zwischenschicht aus Bariumsulfat, Siliziumdioxid oder einem unlöslichen Silikat, beispielsweise Aluminiumsilikat, angeordnet sein, die als Diffusionssperre zwischen Substrat und leitfähiger Schicht fungiert.

Für das Aufbringen der Siliziumdioxidschicht ist folgendes Verfahren anzuwenden: Zu einer auf etwa 50 bis 100 °C, insbesondere 70 bis 80 °C erhitzten Suspension des zu beschichtenden Substrates wird eine Lösung eines wasserlöslichen Silikats, bevorzugt eine Natronwasserglaslösung, zudosiert. Durch gleichzeitige Zugabe von 10%iger Salzsäure wird der pH-Wert bei 4 bis 10, vorzugsweise bei 6,5 bis 8,5, konstant gehalten. Nach Zugabe des Silikats wird noch 30 min nachgerührt.

Die auf diese Weise aufgebrachte Siliziumdioxidschicht sollte zumindest etwa 5 Gew.-%, berechnet als $SiO_2$ und bezogen auf das Substrat, des Pigments ausmachen. Nach oben sind an sich keine Grenzen gesetzt, aber es zeigt sich, daß durch sehr dicke $SiO_2$-Schichten keine Zunahme an Leitfähigkeit mehr bewirkt werden kann. Bevorzugt sind daher Siliziumdioxidschichten von etwa 5-20 Gew.-%, insbesondere etwa 10 %.

Die Bariumsulfatschicht wird nach dem in US 5 380 360 beschriebenen Verfahren aufgebracht. Dabei wird einer auf etwa 50 bis 95 °C, insbesondere 60 bis 80 °C erhitzten Suspension des Substrates ein Komplexbildner, vorzugsweise Zitronensäure, zugesetzt und anschließend die wäßrige Lösung eines Bariumsalzes und eine schwefelsaure Natriumsulfatlösung getrennt voneinander zudosiert. Das mit Bariumsulfat beschichtete Substrat wird dann mit dotiertem Zinnoxid in der oben beschriebenen Weise beschichtet.

Erfindungsgemäß beträgt der Bariumsulfatgehalt des Pigmentes 0,1 bis 50 Gew.-% bezogen auf das Pigment. Das entspricht einer Schichtdicke von etwa 10 bis 100 nm.

Die Beschichtung der Substrate erfolgt nach bekannten Verfahren, indem diese in Wasser suspendiert und zuerst mit Siliziumdioxid, einem Silikat oder Bariumsulfat beschichtet werden und anschließend bei erhöhter Temperatur und einem geeigneten pH-Wert die Lösung eines wasserlöslichen Zinnsalzes, einer wasserlöslichen Phosphorverbindung und eines wasserlöslichen Fluorids zugegeben, wobei gegebenenfalls durch gleichzeitige Zugabe einer Säure oder Base der pH-Wert im geeigneten Bereich gehalten wird.

Bei der Ausführungsform des Pigmentes ohne Zwischenschicht werden die Substrate in Wasser suspendiert, und es wird vorzugsweise bei erhöhter Temperatur und einem geeigneten pH-Wert die Lösung eines wasserlöslichen Zinnsalzes, einer wasserlöslichen Phosphorverbindung und eines Fluorids zugegeben, wobei gegebenenfalls durch gleichzeitige Zugabe einer Säure oder Base der pH-Wert im geeigneten Bereich gehalten wird.

Zweckmäßigerweise wird man die technisch leicht zugänglichen Basen, wie z.B. NaOH, KOH oder Ammoniak, als Säuren verdünnte Mineralsäuren verwenden. Da die Basen und Säuren nur der pH-Wertänderung dienen, ist ihre Natur unkritisch, so daß auch andere Säuren und Basen eingesetzt werden können.

Geeignete Zinnsalze sind die 2- und 4-wertigen Halogenide, Sulfate oder Nitrate, vorzugsweise die Halogenide und insbesondere die Chloride. Besonders bevorzugt ist eine Zinnsalzlösung bestehend aus $SnCl_4$ und $SnCl_2$, wobei das Verhältnis $Sn^{IV}$ zu $Sn^{II}$ im Bereich 90:10 bis 10:90, insbesondere 80:20 bis 60:40 liegt, weiterhin bevorzugt sind Lösungen, die nur Zinn(IV)Salze enthalten. Die Zinnsalze können auch in fester Form der wäßrigen Substratsuspension zugesetzt werden.

Geeignete Phosphorverbindungen sind die Phosphortrihalogenide, Phosphorylhalogenide, die Sauerstoffsäuren des Phosphors sowie Natriumphosphate. Vorzugsweise wird die leicht zugängliche und preiswerte Phosphorsäure oder Natriumphosphat eingesetzt.

Geeignete Fluorverbindungen sind Alkalifluoride und Ammoniumfluorid, wobei letzteres bevorzugt wird.

Die leitfähige Schicht aus Phosphor und Fluor dotiertem Zinnoxid wird in einer Menge von 10 bis 200 Gew.-%, vorzugsweise 50 bis 75 Gew.-%, bezogen auf das Substrat auf das Substrat aufgebracht. Größere Mengen sind zwar an sich auch möglich, es wird jedoch keine weitere Erhöhung der Leitfähigkeit erzielt.

Das Verhältnis von Fluor zu Phosphor in der leitfähigen Schicht beträgt 10:1 bis 1:100, insbesondere 3:10 bis 5:100. Das Verhältnis der Summe beider Dotierstoffe zu Zinn beträgt 0,1:100 bis 10:100, insbesondere 1:100 bis 5:100.

Bei einem zu geringem Gehalt an Phosphor oder Fluorid lassen sich keine hohen Leitfähigkeiten erzielen, während bei einem zu hohen Phosphoroder Fluoridgehalt die Leitfähigkeit drastisch abnimmt.

Die gewünschte homogene Verteilung von Zinn, Fluor und Phosphor in der leitfähigen Schicht läßt sich problemlos dadurch erreichen, daß die Zinn-, Fluorid- und Phosphorverbindungen in Wasser entweder gemeinsam in einer Lösung oder in getrennten Lösungen kontinuierlich und im vorbestimmten Mischungsverhältnis der Substratsuspension bei einem geeigneten pH-Wert von etwa 1 bis 5 und einer geeigneten Temperatur von etwa 50 bis 90 °C so zudosiert werden, daß jeweils unmittelbar eine Hydrolyse und Abscheidung auf dem Substrat erfolgt.

Zur Fällung der Metallsalze kann jede Säure bzw. Base eingesetzt werden. Die optimalen Konzentrationen und pH-Werte können durch Routineversuche ermittelt werden. Üblicherweise wird der einmal zur Fällung eingestellte pH-Wert während der gesamten Fällung beibehalten um einheitliche Pigmente zu erzielen.

Nach Beendigung der Beschichtung werden die Pigmente aus der Suspension abgetrennt, gewaschen, getrocknet und bei Temperaturen von 400-1100 °C, vorzugsweise bei 900-1000 °C unter Sauerstoffausschluß 15 min bis 5 h geglüht. Je nach Wahl des Ausgangsmaterials und der Schichtdicke der dotierten Zinnoxidschicht sind die erfindungsgemäßen Pigmente gelblich, silberfarbig, hellgrau oder leicht grau-braun.

Die leitfähige Schicht kann neben Phosphor und Fluor und Zinnoxid auch noch zusätzlich weitere Metalloxide enthalten. So kann es z.B. vorteilhaft sein, dieser äußeren Schicht zur Erhöhung der thermischen und/oder mechanischen Stabilität, zur Erzeugung spezieller Farbeffekte andere Metalloxide, wie z.B. Aluminiumoxid, Eisenoxid, Zirkoniumoxid oder Chromoxid zuzusetzen. Da durch diese Zusätze der spezifische Widerstand der Pigmente im allgemeinen erhöht wird, wird deren Massenanteil und der äußeren Schicht vorzugsweise nicht zu hoch und kleiner als 25 Gew.-% gewählt. Besonders bevorzugt sind Pigmente, bei denen derartige Zusätze weniger als 10 Gew.-% und insbesondere weniger als 5 Gew.-% ausmachen.

Durch die mit Phosphor und Fluor dotierte Zinnoxidschicht wird den erfindungsgemäßen Pigmenten eine hohe Leitfähigkeit vermittelt. Der spezifische Widerstand ist in jedem Fall kleiner als 1 kΩcm. Im allgemeinen werden Werte von unter 300 Ωcm erhalten.

Zur Messung des spezifischen Widerstandes der Pigmente wird in einem Acrylglas-Rohr mit dem Durchmesser von 2 cm eine kleine Menge von etwa 0,5 g Pigment mit Hilfe eines Gewichts von 10 kg zwischen zwei Metallstempel zusammengepreßt. Von den so verpreßten Pigmenten wird der elektrische Widerstand R gemessen. Aus der Schichtdicke L des komprimierten Pigments ergibt sich der spezifische Widerstand p nach der Beziehung

$$\zeta = R \cdot \frac{\pi \cdot (d/2)^2}{L} \ [Ohm \cdot cm]$$

Die erfindungsgemäßen Pigmente zeichnen sich neben der hohen elektrischen Leitfähigkeit durch eine im Hinblick auf die jeweilige Anwendung optimierbares Deckvermögen und eine optimierbare Farbigkeit aus. Die erfindungsgemäßen Pigmente können je nach ihrer speziellen Ausgestaltung für eine ganze Reihe verschiedener Anwendungen, wie etwa für durchsichtige Elektroden zur Ansteuerung, z.B. von Flüssigkristalldisplays, für antistatische Lackierungen oder für antistatische Kunststoffe, Bodenbeläge etc. verwendet werden. Weiterhin werden sie in Farben, Lacken, Druckfarben und Kunststoffen verwendet.

Gegenstand der Erfindung sind daher ebenfalls Formulierungen, die die erfindungsgemäßen Pigmente enthalten. Die erfindungsgemäßen Pigmente erfüllen die bei den jeweiligen Anwendungen auftretenden Anforderungen oftmals besser als herkömmliche Pigmente und stellen in jedem Fall eine erhebliche Verbreiterung des dem Fachmann verfügbaren Pools derartiger Verbindungen dar. Somit kommt den erfindungsgemäßen Verbindungen eine erhebliche wirtschaftliche Bedeutung zu.

Die aufgezählten Anwendungsmöglichkeiten der erfindungsgemäßen Pigmente sind nur beispielhaft zu verstehen und sollen die Erfindung lediglich erläutern, ohne sie zu begrenzen. Wie auch immer jedoch das spezielle Anforderungsprofil für eine bestimmte Anwendung aussehen mag, der Fachmann kann die Eigenschaften der Pigmente in einem weiten Bereich variieren und im Hinblick auf die jeweilige Anwendung optimieren.

Die folgenden Beispiele sollen die Erfindung erläutern, ohne sie zu begrenzen.

Beispiel 1

100 g $SiO_2$-Flakes (Teilchengröße 1-40 μm) werden in 2 l Wasser suspendiert. Bei einem pH-Wert von 2,3 werden bei 75 °C der Suspension 200 ml einer wäßrigen Lösung, bestehend aus 112 g $SnCl_4 \cdot 5H_2O$, 15 g $SnCl_2 \cdot 2H_2O$, 50 ml konz. HCl, O,2 g 85%ige $H_3PO_4$ und 4,0 g $NH_4F$ zudosiert. Während der Hydrolyse wird der pH-Wert durch Zugabe von NaOH konstant gehalten. Nach Abschluß der Belegung wird das Produkt abgesaugt, mit Wasser gewaschen, getrocknet und bei 1000 °C 30 min unter Stickstoff geglüht. Nach dem Glühen erhält man ein helles Pigment, das einen spezifischen Pulverwiderstand von 100 Ohm cm aufweist.

Beispiel 2

100 g Glimmer mit einer Teilchengröße von 10-60 μm werden in 2 l Wasser suspendiert und auf 75 °C erhitzt. Anschließend wird ein pH-Wert von 1,8 eingestellt und 1 g Citronensäure-Monohydrat zugegeben. Nun erfolgt die gleichzeitige aber separate Zugabe von 11,8 g $Na_2SO_4$ und 1,3 g konz. $H_2SO_4$ in 180 ml Wasser sowie 105 g $BaCl_2 \cdot 2H_2O$ in 300 ml Wasser, wobei der pH-Wert konstant bleibt. Nach Ende der Zugabe wird das Produkt absitzen gelassen, die überstehende Lösung dekantiert und mit frischem Wasser aufgefüllt. Man erhält einen Glimmer, der mit einer Schicht aus $BaSO_4$ überzogen ist.

Diese Suspension wird erneut auf 75 °C erhitzt und auf einen pH-Wert von 2,3 eingestellt. Anschließend werden 200 ml einer wäßrigen Lösung, bestehend aus 112 g $SnCl_4 \cdot 5H_2O$, 15 g $SnCl_2 \cdot 2H_2O$, 50 ml konz. HCl, 0,2 g 85%ige $H_3PO_4$ und 4,0 g $NH_4F$ zudosiert. Während der Hydrolyse wird der pH-Wert durch Zugabe von NaOH konstant gehalten. Nach Abschluß der Belegung wird das Produkt abgesaugt, mit Wasser gewaschen, getrocknet und bei 1000 °C 30 min unter Stickstoff geglüht. Nach dem Glühen erhält man ein helles Pigment, das einen spezifischen Pulverwiderstand von 50 Ωcm aufweist.

**Patentansprüche**

1. Helles, elektrisch leitfähiges Pigment, umfassend ein mit einer leitfähigen Schicht überzogenes Substrat, **dadurch gekennzeichnet, daß** die leitfähige Schicht eine mit Phosphor und Fluor dotierte Zinnoxidschicht ist.

2. Pigment nach Anspruch 1, **dadurch gekennzeichnet, daß** zwischen Substrat und leitfähiger Schicht eine Zwischenschicht angeordnet ist.

3. Pigment nach Anspruch 1 oder 2, **dadurch gekennzeichnet, daß** das Verhältnis von Phosphor und Fluor zu Zinn 0,1:100 bis 10:100 beträgt.

4. Pigment nach mindestens einem der Ansprüche 1 bis 3, **dadurch gekennzeichnet, daß** das Verhältnis von Fluor zu Phosphor 10:1 bis 1:100 beträgt.

5. Pigment nach mindestens einem der Ansprüche 1 bis 4, **dadurch gekennzeichnet, daß** der Gehalt an Zinnoxid bezogen auf das Substrat 10 bis 200 Gew.-% beträgt.

6. Pigment nach mindestens einem der Ansprüche 1 bis 5, **dadurch gekennzeichnet, daß** das Substrat plättchenförmig ist.

7. Pigment nach Anspruch 6, **dadurch gekennzeichnet, daß** das plättchenförmige Substrat aus Glimmer, synthetischem Glimmer, $SiO_2$-, Glas- oder Keramikflakes oder einem Perlglanzpigment besteht.

8. Pigment nach mindestens einem der Ansprüche 1 bis 5, **dadurch gekennzeichnet, daß** das Substrat aus sphärischen $Al_2O_3$-, $BaSO_4$ oder $SiO_2$-Partikeln besteht.

9. Pigment nach mindestens einem der Ansprüche 1 bis 8, **dadurch gekennzeichnet, daß** das Substrat ein Gemisch aus plättchenförmigen und sphärischen Partikeln ist

10. Pigment nach Anspruch 2, **dadurch gekennzeichnet, daß** die Zwischenschicht aus Bariumsulfat, Siliciumdioxid oder einer anderen unlöslichen Schicht besteht

11. Pigment nach Anspruch 10, **dadurch gekennzeichnet, daß** die Zwischenschicht in einer Menge von 5 bis 20 Gew.-%, bezogen auf das Substrat, vorliegt

12. Verfahren zur Herstellung des Pigmentes nach Anspruch 1, **dadurch gekennzeichnet, daß** das Substrat in Wasser suspendiert wird und die Lösung eines hydrolysierbaren Zinnsalzes, die wäßrige Lösung einer Phosphorverbindung und die wäßrige Lösung eines Fluorids zudosiert werden, wobei der pH-Wert der Substratsuspension durch gleichzeitige Zugabe von Säure oder Base in einem Bereich von 1 bis 5 konstant gehalten wird und das beschichtete Substrat abgetrennt, gewaschen, getrocknet und bei Temperaturen von 400 bis 1100 °C unter Ausschluß von Sauerstoff kalziniert wird.

13. Verfahren zur Herstellung des Pigmentes nach den Ansprüchen 1 und 2, **dadurch gekennzeichnet, daß** das Substrat in Wasser suspendiert wird und die wäßrige Lösung eine Silikats zudosiert wird, wobei durch gleichzeitige Zugabe von Säure der pH-Wert in einem Bereicht von 4 bis 10 konstant gehalten wird und anschließend die Lösung eines hydrolysierbaren Zinnsalzes und die wäßrige Lösung einer Phosphorverbindung und die wäßrige Lösung eines Fluorids zudosiert werden, wobei der pH-Wert der Substratsuspension durch gleichzeitige Zugabe von Säure oder Base in einem Bereich von 1 bis 5 konstant gehalten wird und das beschichtete Substrat abgetrennt, gewaschen, getrocknet und bei Temperaturen von 400 bis 1100 °C unter Ausschluß von Sauerstoff kalziniert wird.

14. Verfahren zur Herstellung des Pigmentes nach den Ansprüchen 1 und 2, **dadurch gekennzeichnet, daß** das Substrat in Wasser suspendiert wird und nach Zugabe eines Komplexbildners eine Bariumsalzlösung zudosiert wird, wobei durch gleichzeitige Dosierung von verdünnter Schwefelsäure und Natriumsulfat der pH-Wert in einem Bereich von 0 bis 5 konstant gehalten wird und anschließend die Lösung eines hydrolysierbaren Zinnsalzes und die wäßrige Lösung einer Phosphorverbindung und die wäßrige Lösung eines Fluorids zudosiert werden, wobei der pH-Wert der Substratsuspension durch gleichzeitige Zugabe von Säure oder Base in einem Bereich von 1 bis 5 konstant gehalten wird und das beschichtete Substrat abgetrennt, gewaschen, getrocknet und bei Temperaturen von 400 bis 1100 °C unter Ausschluß von Sauerstoff kalziniert wird.

15. Verwendung des Pigmentes nach den Ansprüchen 1 bis 11 zur Pigmentierung von Lacken, Druckfarben, Kunststoffen und Glasuren für Keramiken und Gläser.

16. Lacke, Druckfarben, Kunststoffe, Kosmetika, und Glasuren für Keramiken und Gläser, welche mit einem Pigment nach den Ansprüchen 1 bis 11 pigmentiert sind.

**Claims**

1. Pale, electrically conductive pigment comprising a substrate coated with a conductive layer, **characterized in that** the conductive layer is a phosphorus- and fluorine-doped tin oxide layer.

2. Pigment according to Claim 1, **characterized in that** an interlayer is disposed between the substrate and the conductive layer.

3. Pigment according to Claim 1 or 2, **characterized in that** the ratio of phosphorus and fluorine to tin is from 0.1:100 to 10:100.

4. Pigment according to at least one of Claims 1 to 3, **characterized in that** the ratio of fluorine to phosphorus is from 10:1 to 1:100.

5. Pigment according to at least one of Claims 1 to 4, **characterized in that** the content of tin oxide relative to the substrate is from 10 to 200% by weight.

6. Pigment according to at least one of Claims 1 to 5, **characterized in that** the substrate is platelet-shaped.

7. Pigment according to Claim 6, **characterized in that** the platelet-shaped substrate consists of mica, synthetic mica, $SiO_2$ flakes, glass flakes or ceramic flakes, or a pearl lustre pigment.

8. Pigment according to at least one of Claims 1 to 5, **characterized in that** the substrate consists of spherical particles of $Al_2O_3$, $BaSO_4$ or $SiO_2$.

9. Pigment according to at least one of Claims 1 to 8, **characterized in that** the substrate is a mixture of platelet-shaped and spherical particles.

10. Pigment according to Claim 2, **characterized in that** the interlayer consists of barium sulfate, silica or another insoluble layer.

11. Pigment according to Claim 10, **characterized in that** the interlayer is present in an amount of from 5 to 20% by weight, based on the substrate.

12. Process for preparing the pigment according to Claim 1, **characterized in that** the substrate is suspended in water and the solution of a hydrolysable tin salt, the aqueous solution of a phosphorus compound and the aqueous solution of a fluoride are metered in, with the pH of the substrate suspension being held constant within a range from 1 to 5 by simultaneous addition of acid or base, and the coated substrate is separated off, washed, dried and calcined in the absence of oxygen at temperatures from 400 to 1100°C.

13. Process for preparing the pigment according to Claims 1 and 2, **characterized in that** the substrate is suspended in water and the aqueous solution of a silicate is metered in, with the pH being held constant within a range from 4 to 10 by simultaneous addition of acid, and then the solution of a hydrolysable tin salt and the aqueous solution of a phosphorus compound and the aqueous solution of a fluoride are metered in, with the pH of the substrate suspension being held constant within a range from 1 to 5 by simultaneous addition of acid or base, and the coated substrate is separated off, washed, dried and calcined in the absence of oxygen at temperatures from 400 to 1100°C.

14. Process for preparing the pigment according to Claims 1 and 2, **characterized in that** the substrate is suspended in water and, following the addition of a complexing agent, a barium salt solution is metered in, with the pH being held constant within a range from 0 to 5 by simultaneous metered addition of dilute sulfuric acid and sodium sulfate, and then the solution of a hydrolysable tin salt and the aqueous solution of a phosphorus compound and the aqueous solution of a fluoride are metered in, with the pH of the substrate suspension being held constant within a range from 1 to 5 by simultaneous addition of acid or base, and the coated substrate is separated off, washed, dried and calcined in the absence of oxygen at temperatures from 400 to 1100°C.

15. Use of the pigment according to Claims 1 to 11 for pigmenting paints, printing inks, plastics and glazes for ceramics and glasses.

16. Paints, printing inks, plastics, cosmetics, and glazes for ceramics and glasses, which are pigmented with a pigment according to Claims 1 to 11.

**Revendications**

1. Pigment conducteur électrique clair, comprenant un substrat recouvert d'une couche conductrice, **caractérisé en ce que** la couche conductrice est une couche d'oxyde d'étain dopée au phosphore et au fluor.

2. Pigment selon la revendication 1, **caractérisé en ce qu'**une couche intermédiaire est disposée entre le substrat et la couche conductrice.

3. Pigment selon la revendication 1 ou 2, **caractérisé en ce que** la proportion de phosphore et de fluor par rapport à l'étain est de 0,1:100 jusqu'à 10:100.

4. Pigment selon au moins l'une des revendications 1 à 3, **caractérisé en ce que** le rapport du fluor au phosphore est de 10:1 à 1:100.

5. Pigment selon au moins l'une des revendications 1 à 4, **caractérisé en ce que** la teneur en oxyde d'étain par rapport au substrat est de 10 à 200 % en poids.

6. Pigment selon au moins l'une des revendications 1 à 5, **caractérisé en ce que** le substrat a une forme de plaquette.

7. Pigment selon la revendication 6, **caractérisé en ce que** le substrat en forme de plaquette est constitué de mica, de mica synthétique, de $SiO_2$, d'éclats de verre ou de céramique ou d'un pigment nacrant.

8. Pigment selon au moins l'une des revendications 1 à 5, **caractérisé en ce que** le substrat est constitué de particules sphériques d'$Al_2O_3$, de $BaSO_4$ ou de $SiO_2$.

9. Pigment selon au moins l'une des revendications 1 à 8, **caractérisé en ce que** le substrat est un mélange de particules en forme de plaquette et de particules sphériques.

10. Pigment selon la revendication 2, **caractérisé en ce que** la couche intermédiaire est constituée de sulfate de baryum, de dioxyde de silicium ou d'un autre enduit insoluble.

11. Pigment selon la revendication 10, **caractérisé en ce que** la couche intermédiaire est à une teneur de 5 à 20 % en poids par rapport au substrat.

12. Procédé de fabrication du pigment selon la revendication 1, **caractérisé en ce que** le substrat est suspendu dans l'eau et la solution est additionnée d'un sel d'étain hydrolysable, de solution aqueuse d'un composé phosphoré et de solution aqueuse d'un fluorure, tandis que le pH de la suspension de substrat est maintenu constant entre 1 et 5 par addition simultanée d'acide ou de base et le substrat revêtu est séparé, lavé, séché et calciné à des températures de 400 à 1100°C en l'absence d'oxygène.

13. Procédé de fabrication du pigment selon les revendications 1 et 2, **caractérisé en ce que** le substrat est suspendu dans de l'eau et la solution aqueuse d'un silicate est ajoutée, tandis que l'addition simultanée d'acide ou de base maintient le pH constant dans une plage de 4 à 10, et ensuite la solution est additionnée d'un sel d'étain hydrolysable, et de solution aqueuse d'un composé phosphoré et de solution aqueuse d'un fluorure, tandis que le pH de la suspension de substrat est maintenu constant entre 1 et 5 par addition simultanée d'acide ou de base et le substrat revêtu est séparé, lavé, séché et calciné à des températures de 400 à 1100°C en l'absence d'oxygène,

14. Procédé de fabrication du pigment selon les revendications 1 et 2, **caractérisé en ce que**, le substrat est suspendu dans de l'eau et après addition d'un agent complexant une solution de sel de baryum est ajoutée, tandis que par addition simultanée d'acide sulfurique dilué et de sulfate de sodium le pH est maintenu constant dans une plage de 0 à 5 et ensuite la solution est additionnée d'un sel d'étain hydrolysable et la solution aqueuse d'un composé phosphoré et la solution aqueuse d'un fluorure sont ajoutées, tandis que le pH de la suspension de substrat est maintenu constant dans une plage de 1 à 5 par addition simultanée d'acide ou de base et le substrat revêtu et séparé, lavé, séché et calciné à des températures de 400 à 1100°C en l'absence d'oxygène.

15. Utilisation du pigment selon les revendications 1 à 11 pour la pigmentation de laques, colorants d'imprimerie, plastiques et glaçures pour les céramiques et les verres.

16. Laque, colorants d'imprimerie, plastiques, cosmétiques et glaçures pour céramiques et verres, qui sont pigmentés avec un pigment selon les revendications 1 à 11.